# FASCICULE DE BREVET EUROPEEN

(11) **EP 0 477 041 B1**
(45) Date de publication et mention de la délivrance du brevet: **01.03.1995**
(21) Numéro de dépôt: 91401947.6
(22) Date de dépôt: 12.07.1991
(51) Int. Cl.: A01B 63/00, A01B 3/46

(54) **Dispositif électronique de contrôle de la profondeur et du relevage d'une charrue semi-portée**
Elektronische Vorrichtung zum Steuern der Arbeitstiefe und des Hebens eines Aufsatteldrehpfluges
Electronic device for controlling the working depth and the raising of a semimounted reversible plough

(30) Priorité: 19.09.1990 FR 9011539
(43) Date de publication de la demande: 25.03.1992
(73) Titulaire: HUARD S.A., F-44142 Chateaubriant Cédex (FR)
(72) Inventeur: Perret, Louis, F-44110 Chateaubriant (FR)
(74) Mandataire: Serin, Jean-Pierre

(56) Documents cités:
- AU-B- 3 028 984
- FR-A- 2 533 409
- US-A- 4 529 039

## Description

La présente invention concerne un dispositif électronique de contrôle automatique de la profondeur et du relevage d'une charrue semi-portée par l'intermédiaire de capteurs disposés sur la charrue et renvoyant des signaux de mesure au dispositif.

Une charrue est semi-portée lorsqu'elle est supportée d'une part à l'avant, par les bielles d'attelage du tracteur et d'autre part à l'arrière, par au moins une roue dont la position est réglable, la plupart du temps à l'aide d'un vérin actionné au moyen du circuit hydraulique du tracteur. Les charrues semi-portées ont un grand nombre de corps de labour et peuvent, de ce fait, atteindre des longueurs supérieures à 10 m, ce qui rend difficile l'obtention d'une profondeur de labour constante entre les corps avant et arrière.

Le contrôle de l'effort de traction s'effectue jusqu'ici au moyen des dispositifs de mesure d'efforts équipant habituellement les tracteurs modernes ; ces dispositifs reçoivent des signaux envoyés par des capteurs d'efforts situés sur le tracteur, et comparent les valeurs de ces signaux à des valeurs de consigne prédéterminées mises en mémoire pour élaborer, à partir de cette comparaison, un signal de commande agissant sur le système de relevage du tracteur. On peut ainsi réguler l'effort de traction en relevant ou en abaissant l'attelage.

Avec un tel système, le relevage du tracteur provoque une variation de hauteur de l'avant de la charrue sans agir sur la partie arrière. On n'obtient donc pas de régularité de profondeur de labour entre les corps avant et arrière, puisque le bâti de la charrue n'est plus parallèle au sol.

D'autre part, l'entrée en raie et la sortie de raie se font simultanément pour tous les corps de labour de la charrue. Ce qui fait que, lorsque le premier corps arrive en bout de champ, la charrue devant alors être relevée, les autres corps sont aussi relevés et la longueur de sillon pour un corps de labour correspondant à la distance de ce corps de labour au premier est perdue. Si l'on considère que le dernier soc peut être situé à plus de 10 m en arrière du premier, et que ceci se répète à chaque passage, on s'aperçoit que plusieurs hectares peuvent ne pas être labourés et donc ne rien produire. C'est pour cela que l'on doit effectuer un labour supplémentaire de cette partie non travaillée pendant le labour normal, en labourant par exemple perpendiculairement au labour normal.

Afin de remédier à cet inconvénient, et d'éviter un labour complémentaire toujours coûteux en temps et en matériel, il faut décaler dans le temps l'abaissement ou le relevage de l'avant de la charrue par rapport à celui de l'arrière.

Une solution à ces problèmes a été apportée par le certificat d'utilité français FR-A-2.080.686 dans lequel le relevage parallèle de la charrue est assuré par un transfert d'huile de la chambre d'un vérin de refoulement actionnant les bielles de relevage du tracteur à la chambre d'un vérin de relevage situé sur la roue arrière de la charrue. Dans ce système, le décalage chronologique entre l'avant et l'arrière de la charrue est assuré par une lumière, pratiquée dans la tige de piston du vérin de refoulement.

Si elle répond théoriquement au problème posé par les charrues longues semi-portées, cette solution est difficile et très onéreuse à réaliser car, en raison des nombreuses liaisons mécaniques, il faut une grande précision d'usinage des pièces et par dessus tout une grande variété de ces pièces car, le système de commande étant disposé sur le tracteur, il faut pouvoir s'adapter à tous les types de tracteur, de toutes les marques, avec toutes les variantes de géométrie d'attelage de ces marques.

Un perfectionnement à ce système a été apporté par le brevet français FR-A-2.533.409 qui décrit un dispositif de commande de la profondeur de travail du type précité dans lequel on dispose des capteurs sur la charrue et sur le tracteur pour agir sur le système de relevage du tracteur et de la roue support arrière de la charrue, par l'intermédiaire d'un boîtier électronique. Ici aussi on doit avoir des pièces d'adaptation à tous les types d'attelage.

Par ailleurs, le brevet américain US-A-4 529 039 décrit un dispositif électronique de contrôle de la profondeur et du relevage d'un outil semi-porté équipé d'une électrovanne commandant l'alimentation du vérin de réglage de la hauteur du bâti par rapport à une roue support qui comprend un calculateur et un capteur de position envoyant un signal représentatif de l'angle de rotation du bras de support de roue par rapport au bâti. Un tel dispositif ne permet pas de résoudre tous les problèmes posés ci-dessus.

Les problèmes de:
- la possibilité d'atteler une charrue à tous les types de tracteur sans nécessiter d'adaptation, pour avoir une profondeur de travail régulière sur tous les corps ;
- l'obtention d'une entrée et d'une sortie de raie constantes en bout de champ ;
sont résolus, selon l'invention, par un dispositif électronique de contrôle de la profondeur et du relevage d'une charrue semi-portée du type précité, équipée d'une électrovanne commandant l'alimentation du vérin de réglage de la hauteur du bâti par rapport à la roue arrière ce dispositif comportant un calculateur, pourvu d'un microprocesseur et d'une mémoire dans laquelle sont introduits des paramètres inhérents à la charrue et au tracteur, et un premier capteur de position, envoyant au calculateur un signal représentatif de l'angle de rotation du bras de support de la roue par rapport au bâti, ce signal correspondant à la hauteur du bâti sur la roue, ce dispositif étant caractérisé en ce qu'il comporte en outre :
un second capteur de position, envoyant au calculateur un signal représentatif de l'angle de rotation du bâti par rapport à une bielle de l'attelage du tracteur ;
des moyens de mesure de la distance parcourue par la roue, envoyant au calculateur un signal représentatif de cette distance ;
le calculateur élaborant un signal de commande de l'électrovanne régulant l'entrée et la sortie du vérin de réglage de la hauteur du bâti par rapport à la roue arrière à partir les signaux reçus afin d'obtenir une entrée et une sortie progressive des corps de labour en début et en fin de raie et en ce que tous les capteurs sont aptes à être situés sur la charrue.

Selon une réalisation préférentielle de l'invention, le dispositif comporte en outre au moins un contacteur situé près du dispositif de retournement envoyant au calculateur un signal indiquant la position médiane de retournement de la charrue afin que celui-ci commande le passage de l'électrovanne en position de blocage correspondant à la mise en position de transport de la charrue.

Selon l'invention le dispositif comporte en outre une console reliée au calculateur sur laquelle sont situés les moyens d'introduction des paramètres dans la mémoire du calculateur ainsi que les moyens de sélection des modes de transport et de travail de la charrue.

La console peut être placée sur le tracteur près du conducteur ou sur la charrue .

Selon une réalisation particulière de l'invention, le calculateur est également relié à une seconde électrovanne et lui envoie un signal de commande qui la fait passer en une position où elle met en relation le vérin de réglage avec un accumulateur oléopneumatique faisant office d'amortisseur pendant le transport de la charrue.

Les capteurs peuvent être des capteurs de position angulaire ou de proximité et les moyens de mesure de la distance parcourue par la roue sont constitués par un radar ou par un compte-tours.

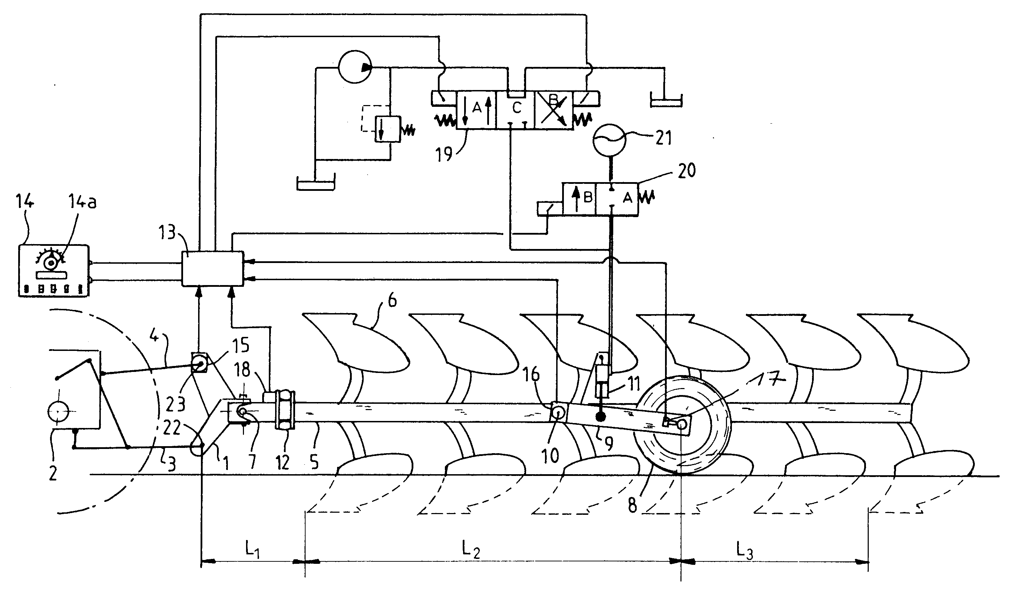

L'invention sera mieux comprise au moyen d'un exemple de réalisation représenté sur le dessin annexé.

On a représenté schématiquement sur la figure unique une charrue semi-portée en travail dans le sol.

La charrue comporte un avant-train 1 relié au tracteur 2 par les bielles d'attelage 3 et 4 selon les axes d'attelage 22 et 23 et un arrière-train comprenant un bâti 5 qui supporte les corps de labour 6. Le bâti 5 est supporté à l'avant par l'avant-train 1, au moyen d'une articulation transversale horizontale 7 schématiquement représentée sur la figure, et en arrière par une roue 8, au moyen d'un support de roue 9 pouvant pivoter autour d'un axe transversal horizontal 10 du bâti 5. Un vérin hydraulique 11 monté entre le bâti 5 et le support de roue 9 permet de régler la position de la roue 8 par rapport au bâti pendant le transport et pendant le labour. La charrue représentée étant réversible, son retournement est assuré par un système connu de vérins, schématiquement représenté en 12.

Le vérin 11 de réglage de position de la roue est alimenté en fluide de pression par une pompe hydraulique à travers une électrovanne 19 à trois positions et peut être relié à un accumulateur oléopneumatique 21 à travers une électrovanne 20.

Les électrovannes 19 et 20 sont actionnées grâce aux signaux émis par un dispositif électronique 13.

Ce dispositif 13 comprend un calculateur qui traite les signaux reçus de capteurs 15, 16, 17 et 18 en fonction de paramètres inhérents à la charrue et élabore à partir de ceux-ci les signaux de commande des électrovannes 19 et 20.

Les capteur 15 et 16 sont, dans cet exemple, des capteurs de variation angulaire. Le capteur 15 mesure la rotation de l'arrière-train par rapport à la biellette 4 de l'attelage du tracteur tandis que le capteur 16 mesure la rotation du support de roue 9 par rapport au bâti 5. Le capteur 17 est un compteur des tours de la roue 8 et le capteur 18 est un contacteur qui est actionné lorsque le bâti a effectué environ un quart de retournement pour passer dans la position de transport.

L'ensemble des éléments 15 à 21 est situé sur la charrue.

Le dispositif 13 est relié à une console 14 située par exemple sur le tracteur près du conducteur

Le système fonctionne comme suit:

Le laboureur introduit (une seule fois s'il travaille toujours avec la même configuration) dans la mémoire du dispositif 13, par la console 14, les paramètres inhérents à la charrue et au tracteur:
- nombre de corps de labour,
- largeur de travail par corps,
- longueur de la bielle d'attelage 4 du tracteur
- distance L₁, entre l'axe d'attelage 22 et le premier corps de labour
- distance L₂ entre le premier corps de labour et l'axe de la roue 8
- distance L₃ entre l'axe de la roue 8 et le dernier corps de labour
- la profondeur de travail désirée.

Cette saisie des paramètres peut aussi être faite en usine.

Pour effectuer une entrée en raie bien parallèle au bord du champ, lorsque les bielles d'attelage 3 et 4 sont abaissées, le calculateur 13 compare les signaux de variation angulaire émis par les capteurs 15 et 16 et, en fonction de la différence et, en tenant compte des paramètres constants L₁, L₂ et L₃ ainsi que du nombre de tours de roue effectués, transformé en impulsions et transmis par le capteur 17, élabore un signal de commande de rentrée du vérin 11 envoyé à l'électrovanne 19 qui passe alternativement en position d'ouverture B pour laisser le fluide s'écouler de la chambre du vérin 11 vers la bâche puis en position neutre C en fonction de l'avancement des corps.

De ce fait chaque corps va rentrer en terre progressivement, au fur et à mesure de la rentrée du vérin 11 qui s'effectue selon le programme exécuté par le calculateur.

Pendant le labour, on garde une profondeur de travail régulière, quelles que soient les irrégularités du terrain, grâce au calculateur qui compare toujours les signaux émis par les capteurs de position angulaire 15 et 16 et commande l'électrovanne 19 dans un sens ou dans l'autre pour relever l'arrière en envoyant le fluide au vérin 11 (position A) ou pour l'abaisser en mettant le vérin en communication avec la bâche (position B). La charrue labourant une portion de terrain régulière, l'électrovanne demeure en position de blocage du fluide dans les deux sens (position C).

L'assiette peut être à tout moment corrigée au moyen du potentiomètre 14a de la console 14 qui permet de modifier la valeur préréglée de l'angle que fait le bâti 5 avec l'horizontale

En bout de raie, le processus de sortie s'effectue exactement de la manière inverse de l'entrée.

Lorsque la commande de relevage est actionnée, le calculateur élabore à nouveau un signal de commande du vérin 11, toujours à partir de la comparaison des signaux fournis par les capteurs 15 et 16 et en fonction des paramètres préréglés ainsi que du nombre de tours de roue effectué depuis le début de la commande. L'électrovanne 19 est alors mise en position A, pour envoyer le fluide au vérin 11, et alternativement en position neutre C, afin de le déployer en fonction du programme exécuté par le calculateur 13.

On obtient ainsi une sortie de raie progressive de tous les corps au fur et à mesure de la sortie du vérin 11.

Lorsque la position de transport est sélectionnée sur le terminal 14a, le dispositif 13 élabore un signal qui commande l'électrovanne 19 de façon à la mettre en position neutre C afin de garder une certaine quantité de fluide dans le vérin 11 et le maintenir en position moyenne.

Le conducteur commande alors le retournement pour mettre la charrue en position de transport, c'est à dire les corps de labour dirigés vers le haut. Le capteur 18 est donc actionné après environ un quart de tour et envoie un signal au dispositif 13 qui émet à son tour un signal de commande vers l'électrovanne 20 pour la faire passer de la position A, dans laquelle l'accumulateur 21 n'est pas relié au circuit, à la position B, dans laquelle l'accumulateur 21 assure le maintient de la pression dans le vérin 11 et fait office de suspension en cas d'à-coups pendant le transport.

On peut aussi utiliser un radar à la place du compte-tour comme capteur 17.

L'électrovanne 19 peut aussi être une vanne à ouverture progressive, ce qui permet de réguler la sortie du vérin sans changement alternatif de position de la vanne.

## Revendications

1. Dispositif électronique de contrôle de la profondeur et du relevage d'une charrue semi-portée équipée d'une électrovanne (19) commandant l'alimentation du vérin (11) de réglage de la hauteur du bâti par rapport à la roue arrière (8), ce dispositif comportant un calculateur (13), pourvu d'un microprocesseur et d'une mémoire dans laquelle sont introduits des paramètres inhérents à la charrue et au tracteur, et, un premier capteur de position (16), envoyant au calculateur un signal représentatif de l'angle de rotation du bras de support (9) de la roue (8) par rapport au bâti (5), ce signal correspondant à la hauteur du bâti sur la roue, ce dispositif étant
caractérisé en ce qu'il comporte en outre :
un second capteur de position (15), envoyant au calculateur un signal représentatif de l'angle de rotation du bâti (5) par rapport à une bielle (4) de l'attelage du tracteur ;
des moyens de mesure de la distance parcourue par la roue (8), envoyant au calculateur un signal représentatif de cette distance ;
le calculateur (13) élaborant à partir des signaux reçus, un signal de commande de l'électrovanne (19) qui régule l'entrée et la sortie du vérin (11) de réglage de la hauteur du bâti (5) par rapport à la roue arrière (8), afin d'obtenir une entrée et une sortie progressive des corps de labour en début et en fin de raie et en ce que tous les capteurs sont aptes à être situés sur la charrue.

2. Dispositif électronique de contrôle de la profondeur et du relevage d'une charrue semi-portée selon la revendication 1, caractérisé en ce qu'il comporte en outre au moins un capteur (18), situé près du dispositif de retournement (12), envoyant au calculateur (13) un signal indiquant que la position médiane de retournement de la charrue est atteinte afin que celui-ci commande le passage de l'électrovanne (19) en position de blocage correspondant à la mise en position de transport de la charrue.

3. Dispositif électronique de contrôle de la profondeur et du relevage d'une charrue semi-portée selon l'une quelconque des revendications 1 ou 2, caractérisé en ce qu'il comporte en outre une console (14) reliée au calculateur (13) sur laquelle sont situés des moyens d'introduction des paramètres dans la mémoire du calculateur ainsi que des moyens de sélection (14a) des modes de transport ou de travail de la charrue.

4. Dispositif électronique de contrôle de la profondeur et du relevage d'une charrue semi-portée selon la revendication 3 caractérisé en ce que la console (14) est placée sur le tracteur près du conducteur.

5. Dispositif électronique de contrôle de la profondeur et du relevage d'une charrue semi-portée selon l'une quelconque des revendications précédentes, caractérisé en ce que le calculateur est également relié à une seconde électrovanne (20) et lui envoie un signal de commande qui la fait passer en une position dans laquelle elle met en relation le vérin de réglage (11) avec un accumulateur oléopneumatique (21) faisant office d'amortisseur pendant le transport de la charrue.

6. Dispositif électronique de contrôle de la profondeur et du relevage d'une charrue semi-portée selon la revendication 1 caractérisé en ce que les capteurs (15, 16) peuvent être des capteurs de position angulaire ou de proximité.

7. Dispositif électronique de contrôle de la profondeur et du relevage d'une charrue semi-portée selon la revendication 1, caractérisé en ce que les moyens de mesure de la distance parcourue par la roue (8) sont constitués par un radar.

8. Dispositif électronique de contrôle de la profondeur et du relevage d'une charrue semi-portée selon la revendication 1, caractérisé en ce que les moyens de mesure de la distance parcourue par la roue (8) sont constitués par un compte-tours.

## Claims

1. An electronic device for controlling the depth and the raising of a semi-mounted plough equipped with an electro-valve (19) controlling the supply to the jack (11) for adjusting the height of the frame with respect to the rear wheel (8), this device having a computer (13) provided with a microprocessor and a memory into which are introduced parameters inherent in the plough and the tractor, and a first position sensor (16) sending to the computer a signal representative of the angle of rotation of the support arm (9) of the wheel (8) with respect to the frame (5), this signal corresponding to the height of the frame on the wheel, this device being characterised in that it additionally has :
a second position sensor (15), sending to the computer a signal representative of the angle of rotation of the frame (5) with respect to a coupling rod (4) of the tractor;
means for measuring the distance covered by the wheel (8), sending to the computer a signal representative of this distance;
the computer (13) calculating from the received signals, a signal controlling the electro-valve (19) which regulates the inward and outward movements of the jack (11) for adjusting the height of the frame (5) with respect to the rear wheel (8), in order to obtain a progressive lowering and raising of the working bodies at the beginning and end of the furrow,
and in that all the sensors are adapted to be located on the plough.

2. An electronic device for controlling the depth and the raising of a semi-mounted plough according to Claim 1, characterised in that it also has at least one sensor (18), located close to the reversing device (12), sending to the computer (13) a signal indicating that the median reversal position of the plough has been reached in order that this latter control the passage of the electro-valve (19) into the closure position corresponding to the transporting position of the plough.

3. An electronic device for controlling the depth and the raising of a semi-mounted plough according to either of Claims 1 or 2, characterised in that it also has a console (14) connected to the computer (13), on which console are located means for introducing parameters into the memory of the computer, as well as means (14a) for selecting the transport or working modes of the plough.

4. An electronic device for controlling the depth and the raising of a semi-mounted plough according to Claim 3, characterised in that the console (14) is positioned on the tractor close to the driver.

5. An electronic device for controlling the depth and the raising of a semi-mounted plough according to any one of the preceding claims, characterised in that the computer is also connected to a second electro-valve (20) and sends to it a control signal which causes it to move into a position in which it brings the adjustment jack (11) into relationship with an oleopneumatic accumulator (21) acting as a shock absorber during transport of the plough.

6. An electronic device for controlling the depth and the raising of a semi-mounted plough according to Claim 1, characterised in that the sensors (15,16) may be angular position or proximity sensors.

7. An electronic device for controlling the depth and raising of a semi-mounted plough according to Claim 1, characterised in that the means for measuring the distance covered by the wheel (8) are constituted by radar.

8. An electronic device for controlling the depth and the raising of a semi-mounted plough according to Claim 1, characterised in that the means for measuring the distance covered by the wheel (8) are constituted by a rotation counter.

## Patentansprüche

1. Elektronische Vorrichtung zum Steuern der Arbeitstiefe und des Hebens eines Aufsatteldrehpfluges, der mit einem Elektroventil (19) ausgestattet ist, das die Beaufschlagung des Zylinders (11) zur Regelung der Höhe des Gestells relativ zum Hinterrad (8) bestimmt, mit einem Rechner (13), der einen Mikroprozessor und einen Speicher aufweist, in den Parameter des Pfluges und der Zugmaschine eingegeben werden, und mit einem ersten Lageaufnehmer (16), der dem Rechner ein für den Drehwinkel des Stützarms (9) für das Rad (8) in Bezug auf das Gestell (5) repräsentatives Signal übermittelt, das der Höhe des Gestells über dem Rad entspricht, **dadurch gekennzeichnet**, **daß** die Vorrichtung außerdem folgende Einrichtungen aufweist:
einen zweiten Lageaufnehmer (15), der dem Rechner ein für den Drehwinkel des Gestells (5) relativ zu einem Kuppelglied (4) der Zugmaschine repräsentatives Signal übermittelt, und
Mittel zur Messung der vom Rad (8) zurückgelegten Strecke, die an den Rechner ein für diese Strecke repräsentatives Signal abgeben,
wobei der Rechner (13) ausgehend von den empfangenen Signalen ein Steuersignal für das Elektroventil (19) erarbeitet, welches das Ein- und Ausfahren des Zylinders (11) zur Regelung der Höhe des Gestells (5) relativ zum Hinterrad (8) regelt, um ein zunehmendes Ein- und Ausfahren der Pflugkörper am Anfang und am Ende der Furche zu erreichen, und daß
sämtliche Aufnehmer so ausgebildet sind, daß sie auf dem Pflug angeordnet sein können.

2. Elektronische Vorrichtung zum Steuern der Arbeitstiefe und des Hebens eines Aufsatteldrehpfluges nach Anspruch 1, dadurch gekennzeichnet, daß sie außerdem mindestens einen nahe bei der Kippvorrichtung (12) angebrachten Aufnehmer (18) aufweist, der dem Rechner (13) ein Signal übermittelt, welches das Erreichen der mittleren Kipplage des Pfluges anzeigt, damit dieser das Elektroventil (19) in eine Blockierlage entsprechend einem Verbringen des Pfluges in dessen Transportlage überführt.

3. Elektronische Vorrichtung zum Steuern der Arbeitstiefe und des Hebens eines Aufsatteldrehpfluges nach einem der Ansprüche 1 oder 2, dadurch gekennzeichnet, daß sie außerdem eine mit dem Rechner (13) verbundene Konsole (14) umfaßt, auf der Mittel zur Eingabe von Parametern in den Speicher des Rechners sowie Mittel (14a) zur Auswahl von Transport- oder Arbeitsweisen des Pfluges angeordnet sind.

4. Elektronische Vorrichtung zum Steuern der Arbeitstiefe und des Hebens eines Aufsatteldrehpfluges nach Anspruch 3, dadurch gekennzeichnet, daß die Konsole (14) auf der Zugmaschine nahe der Bedienungsperson angeordnet ist.

5. Elektronische Vorrichtung zum Steuern der Arbeitstiefe und des Hebens eines Aufsatteldrehpfluges nach einem der vorhergehenden Ansprüche, dadurch gekennzeichnet, daß der Rechner auch mit einem zweiten Elektroventil (20) verbunden ist und diesem ein Steuersignal übermittelt, das es in eine Lage überführt, in der es den Zylinder (11) zum Regeln mit einem Öl-Druckluftspeicher (21) verbindet, der während des Transportes des Pfluges als Stoßdämpfer dient.

6. Elektronische Vorrichtung zum Steuern der Arbeitstiefe und des Hebens eines Aufsatteldrehpfluges nach Anspruch 1, dadurch gekennzeichnet, daß die Aufnehmer (15, 16) Winkellagenaufnehmer oder Nähesensoren sein können.

7. Elektronische Vorrichtung zum Steuern der Arbeitstiefe und des Hebens eines Aufsatteldrehpfluges nach Anspruch 1, dadurch gekennzeichnet, daß die Mittel zur Messung der vom Rad (8) zurückgelegten Strecke aus einem Radargerät bestehen.

8. Elektronische Vorrichtung zum Steuern der Arbeitstiefe und des Hebens eines Aufsatteldrehpfluges nach Anspruch 1, dadurch gekennzeichnet, daß die Mittel zur Messung der vom Rad (8) zurückgelegten Strecke aus einem Drehzahlzähler bestehen.
